# EUROPEAN PATENT APPLICATION

(11) **EP 3 337 155 A1**
(43) Date of publication of application: **20.06.2018**
(21) Application number: 16834649.2
(22) Date of filing: 10.08.2016
(51) Int. Cl.: H04N 5/225

(54) **MINI SPORT CAMERA WITH ROTATING SHAFT**

(30) Priority: 11.08.2015 CN 201520599309 U
(71) Applicant: CONC Technology Co., Ltd., Shenzhen, Guangdong 518100 (CN)
(72) Inventor: WANG, Lei, Shenzhen Guangdong 518100 (CN)
(74) Representative: Griepenstroh, Jörg
(86) International application number: PCT/CN2016/094312
(87) International publication number: WO 2017/025025

(57) **Abstract**

A mini action camera with rotating shaft comprises a main body (1) and a screen (2). The main body is configured as a cuboid shape with a square bottom surface; an indicator light (3) and a power switch (4) are provided on an upper side of the main body (1); a lens (5) is provided on a front surface; a WIFI button (6), an indicator light (3), a microphone hole (7), an SD card slot (8) and a USB interface (9) are provided on a right surface; a universal circular strong magnet (10) and a metallic elastic piece (11) thereunder are provided on a back surface; a ventilation opening (12), a speaker (13) and a rotating shaft interface are provided on a left side; a retaining nut (14) is provided on a lower side. A coin rotary knob (16) is provided at the rotating shaft interface, a rotating shaft (15) is provided on the right side of the screen (2), and the screen (2) is removably connected to the main body (1) via the rotating shaft (15). The screen (2) is detachable and rotatable, contents shot by the camera can be viewed from different angles, and the screen can be connected to a movable bracket or an external power source via the circular strong magnet (10).

## Description

### TECHNICAL FIELD

The present disclosure relates to a FANCAM mini action camera with rotating shaft.

### BACKGROUND

An action camera is a camera with an adorable shape, it is fixed freely to get rid of tedious fixed brackets, and it doesn't need to be "held" with hands always, which is simple and convenient. However, at present, there is a flaw in the action camera that, the screen connected thereto has no way to rotate and can only be fixed at an angle, which brings the user a lot of inconvenience.

### SUMMARY

To solve the above problems, the present disclosure provides a FANCAM mini action camera with rotating shaft.

A FANCAM mini action camera with rotating shaft comprises a main body and a screen. The main body is configured as a cuboid shape with a square bottom surface; an indicator light and a power switch are provided on an upper side of the main body; a lens is provided on a front surface of the main body; a WIFI button, an indicator light, a microphone hole, an SD card slot and a USB interface are provided on a right surface of the main body; a universal circular strong magnet and a metallic elastic piece thereunder are provided on a back surface of the main body; a ventilation opening, a speaker and a rotating shaft interface are provided on a left side of the main body; a retaining nut is provided on a lower side of the main body. A coin rotary knob is provided at the rotating shaft interface, a rotating shaft is provided on the right side of the screen, and the screen is removably connected to the main body via the rotating shaft.

Further, an operation button is provided on an upper side of the screen, the indicator light and a charging socket are provided on a left side of the screen.

Further, the coin rotary knob is a suction lid of which outer ring is bright, and an inner ring thereof has a frosted surface, the SD card slot and the USB interface are provided with a silicone cover.

Further, a shell of the lens, each buttons and the rotating shaft are provided by two-shot injection molding, an external thereof comprises flexible silicone or plastic and an internal thereof comprises hard silicone or plastic, wherein a chamfer edge of the shell of the lens and a graphic slot of the each buttons are provided as bright surfaces.

Further, each surfaces of the main body and the screen is configured as an aluminum frosted surface.

Further, the screen is equipped with an automatic battery cell.

Further, the metallic elastic piece under the strong magnet is also provided with a power supply module to supply electrical power for the main body.

Compared to prior art, the present disclosure has the following beneficial effects: when the FANCAM mini action camera with rotating shaft of the present disclosure is in use, the screen and the main body are detachably connected to each other by the rotating shaft. When the coin rotary knob of the rotating shaft interface on the main body is turned on, the screen can be connected to the main body, and can rotate freely in either direction to change the angle, which can achieve a view observing the contents shot by the camera from different angles. The strong magnet can attract metal devices and be fixed conveniently, and can connect to the external power source. The metallic elastic piece under the strong magnet can be used for supplying electrical power for the main body with the external power supply module, the battery cell of the screen can supply electrical power for itself and also for the main body. A circular microphone port can also serve as a ventilation opening, which is practical and convenient. The present disclosure has the advantages of small size, beautiful appearance, good hand feeling and powerful functions.

### BRIEF DESCRIPTION OF THE DRAWING

FIG. 1 is a perspective view 1 of the present disclosure;
FIG. 2 is a perspective view 2 of the present disclosure;
FIG. 3 is a perspective view 3 of the present disclosure;
FIG. 4 is a front view of the present disclosure;
FIG. 5 is a right view of the present disclosure;
FIG. 6 is a left view of the present disclosure;
FIG. 7 is a rear view of the present disclosure;
FIG. 8 is a top view of the present disclosure;
FIG. 9 is a bottom view of the present disclosure;
FIG. 10 is a perspective view of the main body of the present disclosure;
FIG. 11 is a schematic diagram of the external power source of the present disclosure.

### DETAILED DESCRIPTION OF THE EMBODIMENTS

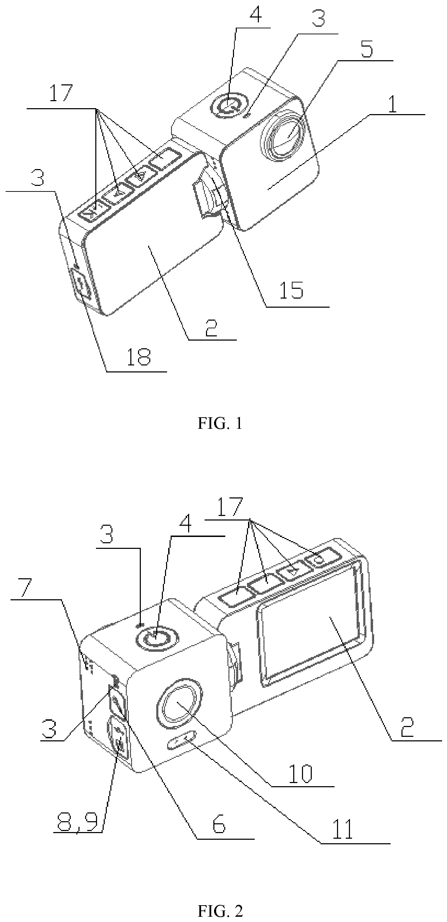

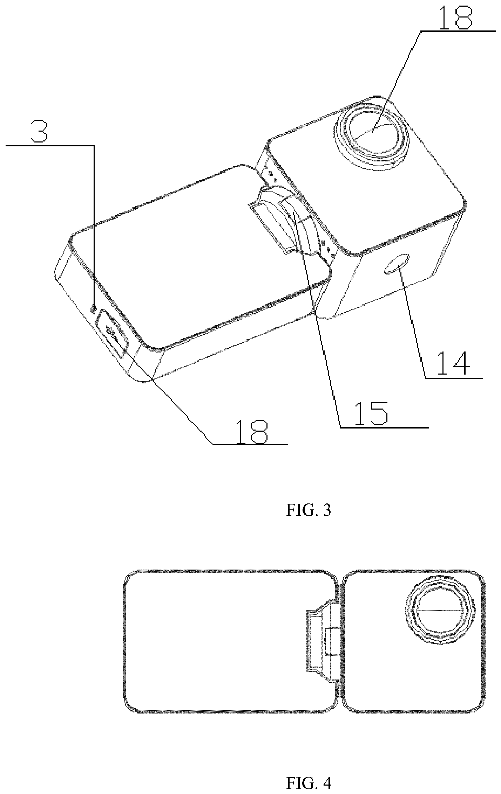

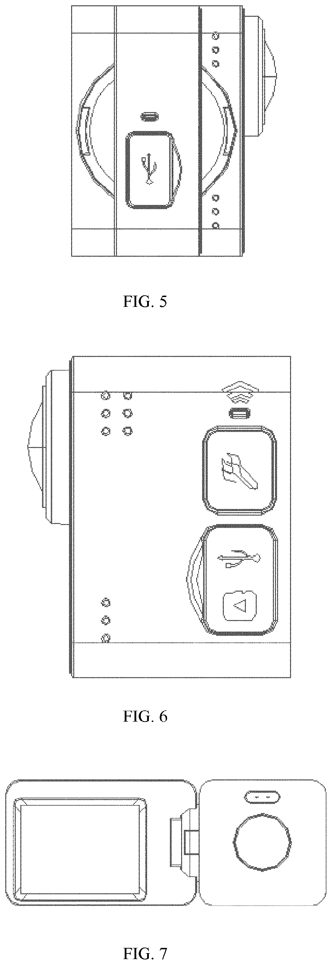

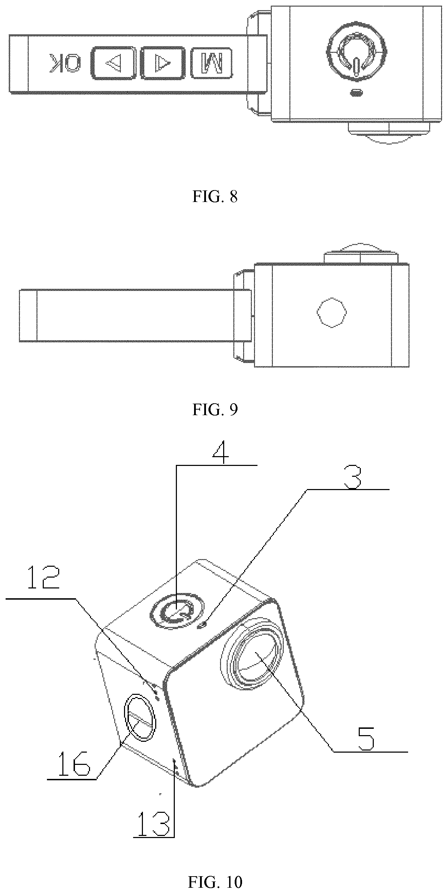

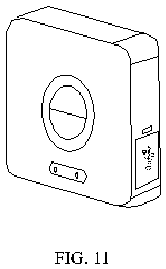

Referring to Figures 1-11, a FANCAM mini action camera with rotating shaft comprises a main body 1 and a screen 2. The main body 1 is configured as a cuboid shape with a square bottom surface; an indicator light 3 and a power switch 4 are provided on an upper side of the main body 1; a lens 5 is provided on a front surface of the main body; a WIFI button 6, an indicator light 3, a microphone hole 7, an SD card slot 8 and a USB interface 9 are provided on a right surface of the main body; a universal circular strong magnet 10 and a metallic elastic piece 11 thereunder are provided on a back surface of the main body; a ventilation opening 12, a speaker 13 and a rotating shaft interface are provided on a left side of the main body; a retaining nut 14 is provided on a lower side of the main body. A coin rotary knob 16 is provided at the rotating shaft interface, a rotating shaft 15 is provided on the right side of the screen, and the screen 2 is removably connected to the left side of the main body via the rotating shaft 15.

An operation button 17 is provided on an upper side of the screen 2, the indicator light 3 and a charging socket 18 are provided on a left side of the screen.

The coin rotary knob 16 is a suction lid of which outer ring is bright, and an inner ring thereof has a frosted surface, the SD card slot 8 and the USB interface 8 are provided with a silicone cover.

A shell of the lens 5, each buttons and the rotating shaft 15 are provided by two-shot injection molding, an external thereof comprises flexible silicone or plastic and an internal thereof comprises hard silicone or plastic, wherein a chamfer edge of the shell of the lens 5 and a graphic slot of the each buttons are provided as bright surfaces.

Each surfaces of the main body 1 and the screen 2 is configured as an aluminum frosted surface.

The screen is equipped with an automatic battery cell.

Compared to prior art, the present disclosure has the following beneficial effects: when the FANCAM mini action camera with rotating shaft of the present disclosure is in use, the screen and the main body are detachably connected to each other by the rotating shaft. When the coin rotary knob of the rotating shaft interface on the main body is turned on, the screen can be connected to the main body, and can rotate freely in either direction to change the angle, which can achieve a view observing the contents shot by the camera from different angles. The strong magnet can attract metal devices and be fixed conveniently, and can connect to the external power source. The metallic elastic piece under the strong magnet can be used for supplying electrical power for the main body with the external power supply module, the battery cell of the screen can supply electrical power for itself and also for the main body. A circular microphone port can also serve as a ventilation opening, which is practical and convenient. The present disclosure has the advantages of small size, beautiful appearance, good hand feeling and powerful functions.

The above embodiments are merely preferred embodiments of the present disclosure, which are not used to limit the present disclosure. Various variations and modifications made without departing from the spirit and principles of the present disclosure shall be involved in the scope of the present disclosure. All of the technical solutions claimed in the present disclosure are set forth in the claims.

### Reference Numbers:

1 - main body
2 - screen
3 - indicator light
4 - power switch
5 - lens
6 - WIFI button
7 - microphone hole
8 - SD card slot
9 - USB interface
10 - universal circular strong magnet
11 - metallic elastic piece
12 - ventilation opening
13 - speaker
14 - retaining nut
15 - rotating shaft
16 - coin rotary knob
17 - operation button
18 - charging socket

## Claims

1. A FANCAM mini action camera with rotating shaft, **characterised in that** it comprises a main body and a screen, the main body is configured as a cuboid shape with a square bottom surface; an indicator light and a power switch are provided on an upper side of the main body; a lens is provided on a front surface of the main body; a WIFI button, an indicator light, a microphone hole, an SD card slot and a USB interface are provided on a right surface of the main body; a universal circular strong magnet and a metallic elastic piece thereunder are provided on a back surface of the main body; a ventilation opening, a speaker and a rotating shaft interface are provided on a left side of the side; a retaining nut is provided on a lower side of the main body; a coin rotary knob is provided at the rotating shaft interface, a rotating shaft is provided on the right side of the screen, and the screen is removably connected to the main body via the rotating shaft.

2. The FANCAM mini action camera with rotating shaft according to claim 1, **characterised in that** an operation button is provided on an upper side of the screen, the indicator light and a charging socket are provided on a left side of the screen.

3. The FANCAM mini action camera with rotating shaft according to claim 1, **characterised in that** the coin rotary knob has a suction lid of which outer ring is bright, and an inner ring thereof has a frosted surface, the SD card slot and the USB interface are provided with a silicone cover.

4. The FANCAM mini action camera with rotating shaft according to claim 1, **characterised in that** a shell of the lens, each buttons and the rotating shaft are provided by two-shot injection molding, an external thereof comprises flexible silicone or plastic and an internal thereof comprises hard silicone or plastic, wherein a chamfer edge of the shell of the lens and a graphic slot of the each buttons are provided as bright surfaces.

5. The FANCAM mini action camera with rotating shaft according to claim 1, **characterised in that** each surfaces of the main body and the screen is configured as an aluminum frosted surface.

6. The FANCAM mini action camera with rotating shaft according to claim 1, **characterised in that** the screen is equipped with an automatic battery cell.

7. The FANCAM mini action camera with rotating shaft according to claim 1, **characterised in that** the metallic elastic piece under the strong magnet is also provided with a power supply module to supply electrical power for the main body.
